# EUROPEAN PATENT SPECIFICATION

(11) **EP 2 767 198 B1**
(45) Date of publication and mention of the grant of the patent: **22.04.2020**
(21) Application number: 14155298.4
(22) Date of filing: 14.02.2014
(51) Int. Cl.: A47J 31/06

(54) **A filter holder for an espresso coffee machine**
Filterhalter für eine Espresso-Kaffeemaschine
Un porte-filtre pour une machine à café expresso

(30) Priority: 14.02.2013 GB 201302598; 14.02.2013 GB 201302603
(43) Date of publication of application: 20.08.2014
(73) Proprietor: Gort-Barten, Alex, Crawley, West Sussex RH11 7ST (GB)
(72) Inventor: Gort-Barten, Alex, Crawley, West Sussex RH11 7ST (GB)
(74) Representative: JENSEN & SON

(56) References cited:
- WO-A1-2010/026529
- WO-A1-2013/190261
- WO-A2-2009/040856
- US-A- 4 882 982

## Description

The present invention relates to a filter holder for use with an espresso coffee machine.

Powered espresso coffee machines are well known. The conventional espresso machine comprises a water chamber, a heating element adapted to boil the water to produce hot water which is then pumped to a filter holder. The filter holder typically comprises a handle portion and a holder portion provided with 2 or 3 lugs which are adapted to engage in the installed position with the machine brew head to where the hot water is pumped. The holder portion is adapted to receive a container for coffee which is usually a metal bowl with perforations in its bottom wall. In use the container is filled with finely ground coffee and hot water is forced through the coffee at a high-pressure generated by the pump to produce the espresso coffee which is collected in a cup placed under the filter holder.

The filter holder of the present invention is intended for use with such a machine but also provides alternative embodiments suitable for dispensing coffee from coffee capsules. The present invention seeks to provide improved means for dispensing coffee for use with both types of machine.

WO2009/040856, discloses a cup for receiving a filter containing the ground coffee. The filter holder is provided with a conventional delivery spout but the novelty of the design lies in the provision of a valve for regulating the back pressure and also a regulating device to adjust the flow of coffee through the valve, which regulating device extends through the handle.

US4,882,982 relates to a percolator holding pan for an espresso machine comprising a body attachable to a delivery assembly, a cavity formed in the body and having a base, a cupped percolator arranged to receive ground coffee, two coffee dispensing spouts, a liquid path extending through the body between the cupped percolator and the spouts, which liquid path includes a compartment interposed to the percolator and the base. Pressure control means being provided in the liquid path to control the pressure downstream of the cupped percolator.

According to the present invention there is provided a filter holder for an espresso coffee machine comprising a handle and an outer holder, which outer holder is adapted to receive a coffee container having a filter , the filter having a plurality of perforations adapted to allow passage of liquid coffee from the coffee container through a flow path to an outlet in the form of a spout, wherein the flow path includes a shallow bowl having sloping sides leading to an outlet leading to an intermediate chamber, which intermediate chamber leads to an outlet throat, the throat being in direct fluid communication with the outlet wherein the cross-sectional area of the throat is smaller than the cross-sectional area of the spout so that the liquid coffee has a higher velocity through the throat which is reduced immediately the coffee passes into the spout, characterised in that the outer holder has an outlet comprising two spouts spaced to allow coffee to be discharged into two cups simultaneously, each spout comprising a longitudinal passage having therein a longitudinally extending rib to divide the flow in the spout.

Preferably, the filter comprises a filter plate having a plurality of upstanding elements adapted to tear, in use, a surface of a coffee capsule, the plate having the plurality of perforations adapted to allow passage of coffee from the capsule through a flow path to an outlet.

In one embodiment, the outlet is an elongate funnel substantially vertically disposed in the operative position, the throat entering the funnel substantially perpendicular to the axis of the funnel at a distance from the funnel outlet. In a further embodiment, the outlet comprises an elongate channel with two opposed spouts extending in opposite directions to allow coffee to be discharged into two cups simultaneously, the throat entering the channel intermediate the two spouts' outlet lips.

Preferably, the spout outlet lips are equidistantly disposed from the throat. Preferably, the cross-sectional area of the throat is smaller than the cross-sectional area of the spout(s) and may be less than 20% of the cross-sectional area of the spout(s).

Preferably, the spouts each comprise an open generally U-shaped channel. More preferably, the spouts are each inclined downwardly towards the lip. In a further embodiment, the spouts extend in opposite directions 180° apart in plan.

Preferably, the ribs each extend inwardly from the outer lip of the spout.

Preferably, the ribs project beyond the outer lips of the spouts.

Preferred embodiments of the present invention will now be described by way of example with reference to the accompanying drawings, in which:
Figure 1 part of a filter holder for use with an espresso coffee machine,
Figure 2 shows a cross-sectional side view of the filter holder,
Figure 3 shows a cross-sectional view through the line A-A of Figure 2,
Figure 4 shows an exploded view of a further filter holder,
Figure 5 shows a cross section through the further filter holder
Figure 6 shows the further filter holder in cross section in the operational position,
Figure 7 shows another embodiment in cross section, and
Figure 8 shows a perspective view of the embodiment of Figure 7.

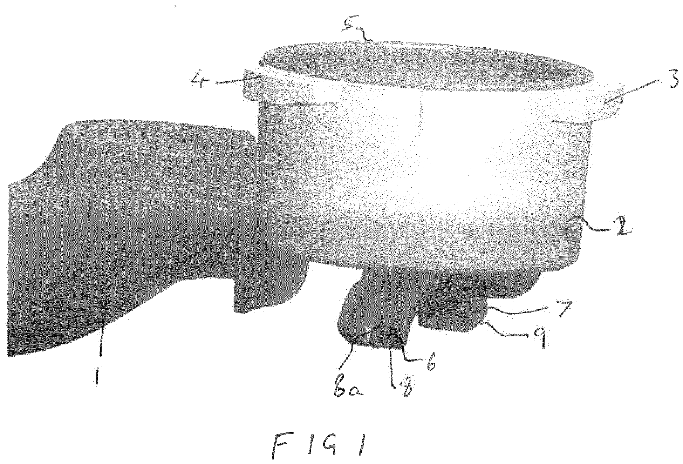

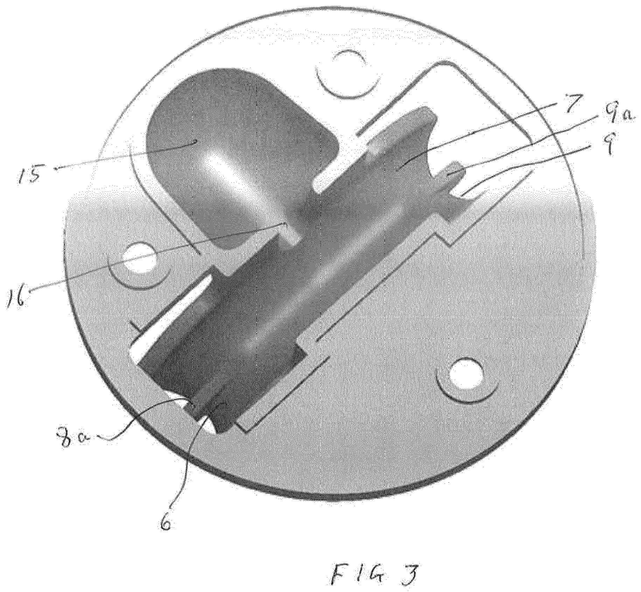

As shown in the drawings, a filter holder for use with an espresso coffee machine comprises a handle portion 1 connected to an outer holder 2 having lugs 3, 4, and 5 by which the holder is secured to the espresso machine. In the embodiment of Figures 1 to 3, the holder has two discharge spouts in the form of generally U-shaped arcuate longitudinal channels 6, 7 disposed 180° apart to face in opposite directions to enable two cups to be filled with coffee simultaneously. The channels are curved downwardly towards their outer lips, reference 8 and 9 respectively, to direct the flow of coffee into the cups. As shown in Figure 1 and Figure 3 in particular, adjacent the outer lip 8, 9 of each channel there is a longitudinally extending upstanding rib, 8a, 9a respectively, each rib extending inwardly to a point where it gradually reduces in height to merge with the surface of the channel. The ribs 8a, 9a may extend slightly outwardly of the lips 8, 9. The height of the ribs is less than the height of the channel. In use, the ribs serve to divide the flow of coffee being discharged through the channel and it has been found, surprisingly, that this leads to better direction and flow of the coffee into the cups and a reduced tendency for drips to form at the lip.

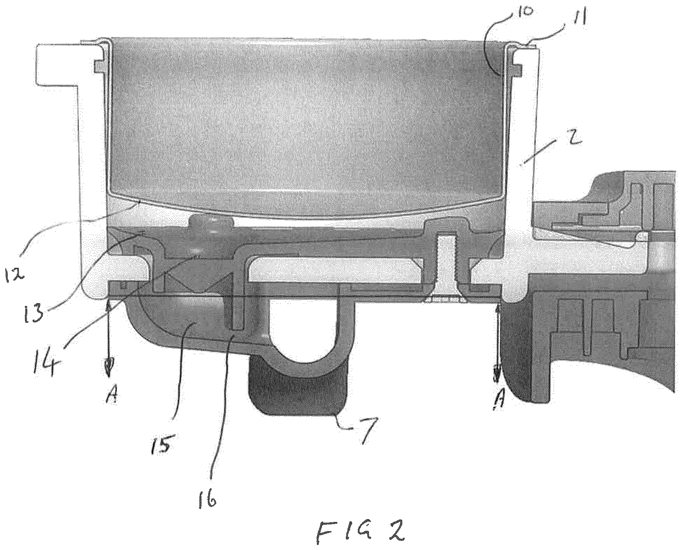

Referring now to Figure 2 in particular, there is shown a cross-section of the outer holder 2 which carries a substantially cylindrical container 10 into which finely ground coffee is placed. The container 10 is supported in the holder 2 by a peripheral flange 11 which is such as to engage the espresso coffee machine brewhead when the filter holder 2 is secured to the machine to form a seal between the coffee machine brew head and the container 10. The container 10 has a lower wall 12 containing a plurality of small holes or perforations (not shown). Beneath the lower wall 12 there is a flow path for the coffee including a shallow bowl 13 having sloping sides leading to an outlet 14 the outlet 14 leading to an intermediate chamber 15 from where, in use, coffee flows through a narrow throat 16 into the channels 6 and 7. The cross-sectional area of the throat 16 is substantially smaller than the cross-sectional area of the channels 6 and 7, typically being 20% or less than the cross-sectional area of the channels. The use of the throat with the smaller cross-sectional area leads to a higher velocity through the throat which is reduced immediately the coffee passes into the channels 6, 7 which results in improved crema. As can be seen particularly in Figure 3, the intermediate chamber 15, throat 16 and the channels 6 and 7 are formed integrally in a synthetic plastics moulding.

Although shown as open channels 6 and 7, it will be appreciated that the spouts could be tubular. The embodiment described uses a container into which loose coffee grounds are placed. The holder is then secured to the espresso coffee brew head and hot waterhot water is injected into the coffee grounds and the resultant liquid coffee drains through the perforations in the lower wall 12 and hence into the coffee cups. It will be understood that features of the embodiments to be described hereinafter which disclose the use of coffee capsules, could be combined with the features disclosed in Figures 1 to 3 to enable the machine of Figures 1 to 3, to function as a coffee capsule machine. In the further embodiments, the filter holder 102 has a single downwardly extending funnel or spout for use in a single cup machine. In this case, although not shown, a throat, for example, can be provided extending generally radially into the funnel, perpendicular to the axis of the funnel.

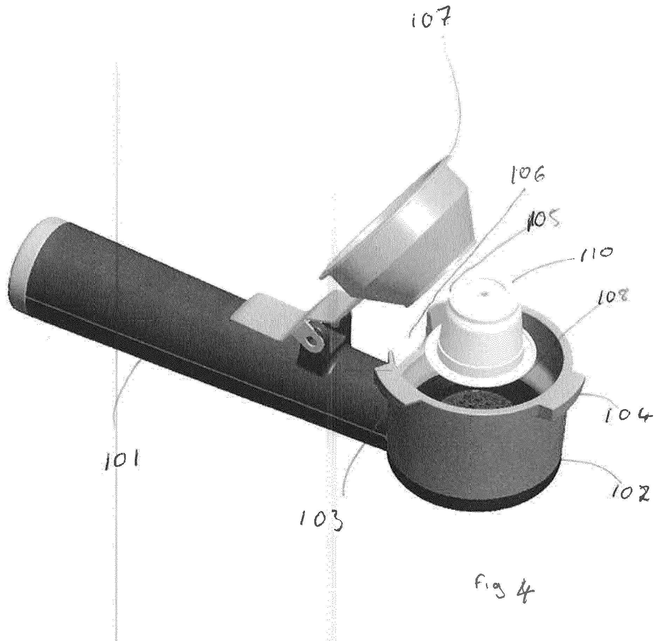

Referring now to Figures 4-8, Figure 4 shows an exploded view of a filter holder falling outside of the scope of the claims, the filter holder comprising a handle portion 101 which is connected to an outer holder 102 having lugs 103, 104, 105. The outer holder has a cut-out 106 in the wall, which is upstanding from and adjacent to the handle portion 101. A retaining member 107 is pivotally mounted on an upper surface of the handle portion 101 and is adapted to pivot from a raised position as shown in Figure 4 to a lowered position described in greater detail below. The retaining member has a generally cylindrical form which has an upper circular cross section and a lower truncated conical cross section. The two cross sections are dimensioned so as to fit within the outer holder 102 and to pass through and co-operate with the cut-out 106. A filter plate 108 comprising a plurality of upstanding truncated pyramids with perforations interstitial to the pyramids to permit coffee to flow out of the holder when in use is mounted in the outer holder.

The coffee capsule 110 comprises an inverted truncated cone and will generally have plastic or aluminium upstanding walls. The upper surface of the capsule is provided with a plurality of perforations around the circumference, with 109 perforations being particularly preferred. The lower face of the capsule comprises an aluminium foil. It has been surprisingly found that the perforations can be dimensioned such that they permit hot water under pressure to enter the capsule but do not lead to significant deterioration in the quality of the coffee.

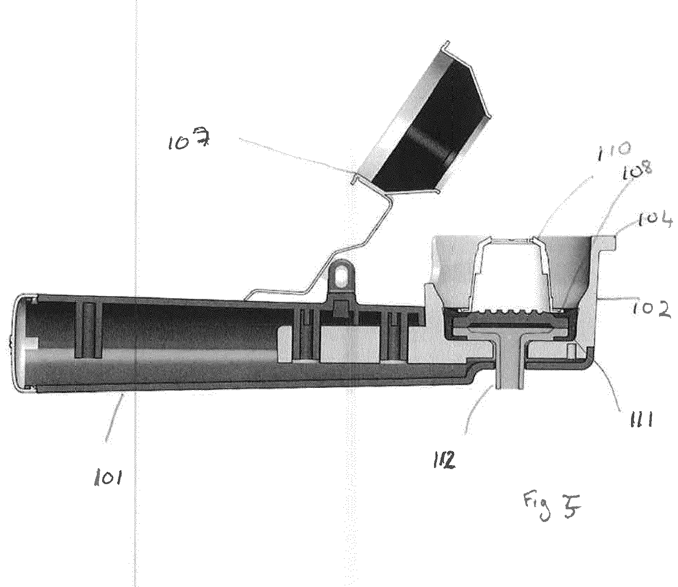

Figure 5 shows a cross section through the filter holder with the retaining member 107 in the raised position and the capsule 110 resting on the filter plate 108. Figure 2 shows the profile of the lever arm of the retaining member 107, the proximal end of which is located perpendicular to the cylindrical wall of the retaining member. A short section of the lever is angled up towards the pivot point away from the plane of the proximal end. The lever then continues from the pivot point in a plane parallel to the proximal end. The distal end of the lever is then angled away from this plane so that in the raised position it is in the same plane as the handle portion 101 and thus can be easily held in position using a thumb or finger.

The filter plate 108 is shown here as a three part mechanism comprising the plate 108 with the upstanding pyramids and perforations, which is mounted in a mounting member 111, in which is also mounted a funnel member 112 for dispensing the coffee that has percolated through the filter plate into a cup. The mounting member 111 ensures that the plate is mounted in a sealing fashion in the outer holder 102 and prevents hot water from escaping around the edge of the filter plate, which could otherwise dilute the espresso. It has been found that the square pyramidal elements on the plate provide a good crema on the espresso.

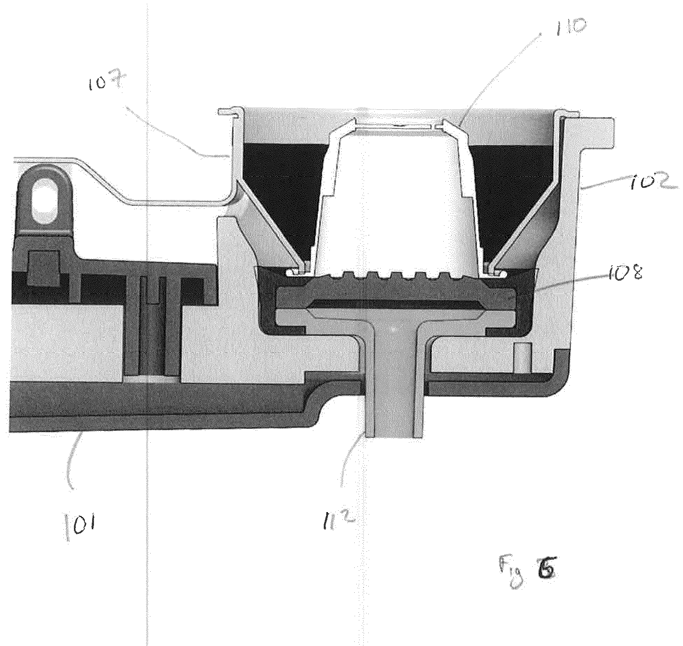

Figure 6 shows the retaining member lowered and in the operational state. The edge of the lower wall of the retaining member 107 engages with the rim of the coffee capsule 110 thus holding the capsule in the central position. The upper edge of the retaining member rests on the upper surface of the outer holder 102, with the flanged edge of the retaining member sitting inside the outer circumference of the outer holder. The retaining member material at this point is sufficiently thin that the holder can still fit in the coffee machine. The holder can then be inserted in the coffee machine in the conventional manner and the capsule is retained in the correct position below the hot water outlet.

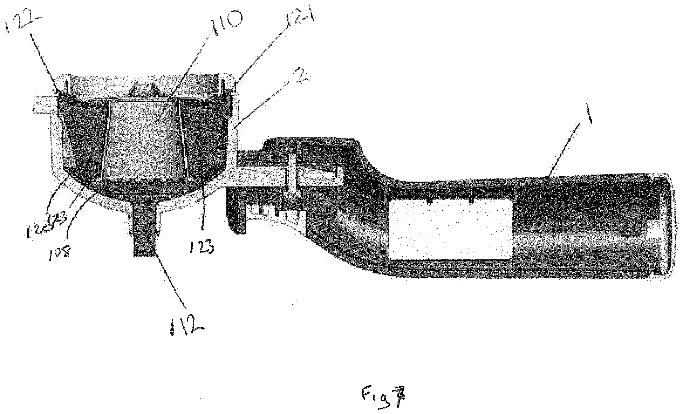

Figure 7 shows an alternative embodiment, falling outside of the scope of the claims. The filter holder comprises the handle portion 101 which is connected to an outer holder 102 having lugs of which only one is visible in the cross section. The filter plate 108 comprising the upstanding truncated pyramidal structure is supported on the lower part of interior wall of the outer holder 102 and is provided with a raised lip 120, the upper edge of which is located in a plane higher than the plane of the upper surface of the truncated pyramidal structure. A funnel 112 is located beneath the filter plate to provide the outlet for the coffee.

The capsule 110 rests on the surface of the upstanding truncated pyramidal structure 108. A retaining structure 121 is adapted to engage with capsule 110 to retain the capsule in position in use. The retaining structure 121 comprises a trapezoidal or truncated conical structure having a central opening adapted to engage with and positively retain the capsule in the installed position. The retaining structure 121 has a rim 122, which rim is adapted to engage in a sealing fashion with the brewhead and the interior wall of the outer holder 102 adjacent to the brewhead in the installed position. A seal 123 is provided to ensure that there is a good seal between the exit surface of the capsule and the retaining structure 121. The seal is also adapted to facilitate the use of different capsule designs by providing for some compensation in the retaining position. The seal may be made of silicone.

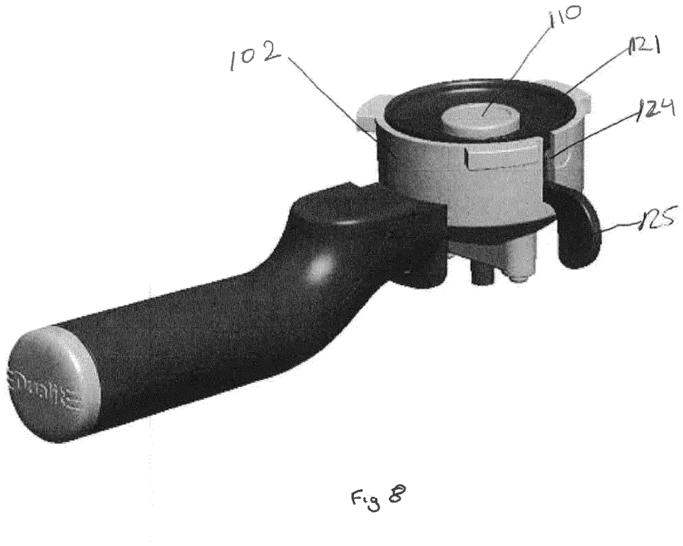

Figure 8 shows a perspective view of the filter holder with the retaining structure 121 in position retaining a capsule 110 in position. The outer holder 102 has a slot 124 cut from the upper edge, which slot 124 is adapted to receive a handle 125 formed on the retaining structure 121. The handle allows for easy removal of the capsule from the holder. The retaining structure 121 can be made from an insulating plastic such as glass fibre reinforced polyamide, so that it can be touched when the capsule is still hot.

In use, the espresso machine is then turned on and hot water is applied under pressure to the perforated capsule end. Due to the pressure of the hot water, which will typically be 9 to 14 bar, the hot water enters the capsule and the pressure of the hot water causes the aluminium foil on the bottom of the capsule to tear against the truncated pyramids on the filter plate 108 by pushing the foil onto the pyramids. The coffee that is extracted by the hot water can then percolate through the capsule and out of the perforations between the truncated pyramids on the filter plate.

## Claims

1. A filter holder for an espresso coffee machine comprising a handle (1) and an outer holder (2), which outer holder (2) is adapted to receive a coffee container (10) having a filter , the filter having a plurality of perforations adapted to allow passage of liquid coffee from the coffee container (10) through a flow path to an outlet in the form of a spout (6,7), wherein the flow path includes a shallow bowl (13) having sloping sides leading to an outlet (14) leading to an intermediate chamber (15), which intermediate chamber (15) leads to an outlet throat (16), the throat (16) being in direct fluid communication with the outlet (14) wherein the cross-sectional area of the throat (16) is smaller than the cross-sectional area of the spout so that the liquid coffee has a higher velocity through the throat (16) which is reduced immediately the coffee passes into the spout (6,7),
**characterised in that** the outer holder (2) has an outlet comprising two spouts (6,7) spaced to allow coffee to be discharged into two cups simultaneously, each spout (6, 7) comprising a longitudinal passage having therein a longitudinally extending rib (8a, 9a) to divide the flow in the spout (6, 7).

2. A filter holder according to Claim 1, wherein the filter comprises a filter plate having a plurality of upstanding elements adapted to tear, in use, a surface of a coffee capsule, the plate having the plurality of perforations adapted to allow passage of coffee from the capsule through a flow path to an outlet.

3. A filter holder according to claim 1 or 2, wherein the outlet is an elongate funnel (6,7) substantially vertically disposed in the operative position, the throat (16) entering the funnel substantially perpendicular to the axis of the funnel at a distance from the funnel outlet.

4. A filter holder according to claim 1 or 2 wherein the outlet comprises an elongate channel with the two opposed spouts (6,7) extend in opposite directions to allow coffee to be discharged into two cups simultaneously and the throat (16) enters the channel intermediate two spouts' outlet lips (8, 9).

5. A filter holder according to claim 4, wherein the spout outlet lips (8, 9) are equidistantly disposed from the throat (16).

6. A filter holder according to any one of claims 1 to5, wherein the cross-sectional area of the throat is less than 20% of the cross-sectional area of the spouts (6, 7).

7. A filter holder according to any one of claims 4 to6 wherein the spouts (6, 7) each comprise an open generally U-shaped channel.

8. A filter holder according to any one of claims 4 to7, wherein the spouts (6, 7) are each inclined downwardly towards the lip (8, 9).

9. A filter holder according to any one of claims 4-8,wherein the spouts (6, 7) extend in opposite directions 180° apart in plan.

10. A filter holder according to any one of Claims 1 to 9, wherein the ribs (8a, 9a) each extend inwardly from the respective outer lip (8, 9) .

11. A filter holder according to claim 10, wherein the ribs (8a, 9a) project beyond the outer lips (8, 9).

## Patentansprüche

1. Ein Filterhalter für eine Espresso-Kaffeemaschine, umfassend einen Griff (1) und einen äußeren Halter (2), wobei der äußere Halter (2) darauf ausgelegt, einen Kaffeebehälter (10) mit einem Filter aufzunehmen, und wobei der Filter mehrere Perforationen hat, die darauf ausgelegt sind, den Fluss von flüssigem Kaffee aus dem Kaffeebehälter (10) entlang eines Strömungswegs zu einem Auslass in Form eines Ausgießers (6, 7) zu ermöglichen, wobei der Strömungsweg eine flache Schale (13) mit abgeschrägten Seiten umfasst, die zu einem Auslass (14) führt, der zu einer Zwischenkammer (15) führt, und die Zwischenkammer (15) zu einer Auslasskehle (16) führt und die Kehle (16) in direkter Fluidverbindung mit dem Auslass (14) steht und wobei die Querschnittsfläche der Kehle (16) kleiner ist als die Querschnittsfläche des Ausgießers, so dass der flüssige Kaffee beim Passieren der Kehle (16) eine höhere Geschwindigkeit hat, die sofort reduziert wird, wenn der Kaffee in den Ausgießer (6, 7) fließt,
**dadurch gekennzeichnet, dass** der äußere Halter (2) einen Auslass hat, der zwei Ausgießer (6, 7) umfasst, die so beabstandet sind, dass Kaffee gleichzeitig in zwei Tassen ausgegeben werden kann, wobei jeder Ausgießer (6, 7) in seinem Inneren einen längs verlaufenden Durchgang hat, in dem sich eine längs verlaufende Rippe (8a, 9a) befindet, die den Fluss in den Ausgießer (6, 7) teilt.

2. Ein Filterhalter nach Anspruch 1, wobei der Filter eine Filterplatte mit mehreren aufrechten Elementen umfasst, die darauf ausgelegt sind, im Gebrauch eine Oberfläche einer Kaffeekapsel aufzureißen, wobei die Platte die mehreren Perforationen aufweist, die den Fluss von Kaffee aus der Kapsel entlang eines Strömungswegs zu einem Auslass ermöglicht.

3. Ein Filterhalter nach Anspruch 1 oder 2, wobei der Auslass ein länglicher Trichter (6, 7) ist, der in der Betriebsposition im Wesentlichen vertikal ausgerichtet ist, und wobei die Kehle (16) in einem Abstand zum Trichterauslass im Wesentlichen rechtwinklig zur Achse des Trichters in den Trichter hineinreicht.

4. Ein Filterhalter nach Anspruch 1 oder 2, wobei der Auslass einen länglichen Kanal mit den beiden einander gegenüber angeordneten Ausgießern (6, 7) umfasst, die in entgegengesetzte Richtungen verlaufen, so dass Kaffee gleichzeitig in zwei Tassen ausgegeben werden kann, und wobei die Kehle (16) zwischen den Auslasslippen (8, 9) der beiden Ausgießer in den Kanal hineinreicht.

5. Ein Filterhalter nach Anspruch 4, wobei die Ausgießer-Auslasslippen (8, 9) in gleichem Abstand von der Kehle (16) angeordnet sind.

6. Ein Filterhalter nach einem der Ansprüche 1 bis 5, wobei die Querschnittsfläche der Kehle weniger als 20% der Querschnittsfläche der Ausgießer (6, 7) beträgt.

7. Ein Filterhalter nach einem der Ansprüche 4 bis 6, wobei die Ausgießer (6, 7) jeweils einen offenen, allgemein U-förmigen Kanal umfassen.

8. Ein Filterhalter nach einem der Ansprüche 4 bis 7, wobei die Ausgießer (6, 7) jeweils nach unten zur Lippe (8, 9) hin geneigt sind.

9. Ein Filterhalter nach einem der Ansprüche 4 bis 8, wobei die Ausgießer (6, 7) um 180° versetzt in entgegengesetzte Richtungen verlaufen.

10. Ein Filterhalter nach einem der Ansprüche 1 bis 9, wobei die Rippen (8a, 9a) jeweils von der entsprechenden äußeren Lippe (8, 9) nach innen verlaufen.

11. Ein Filterhalter nach Anspruch 10, wobei sich die Rippen (8a, 9a) über die äußeren Lippen (8, 9) hinaus erstrecken.

## Revendications

1. Support de filtre pour une machine à expresso comprenant une poignée (1) et un support externe (2), lequel support externe (2) est adapté à recevoir un récipient de café (10) ayant un filtre, le filtre ayant une pluralité de perforations adaptées à permettre le passage de café liquide du récipient de café (10) à travers un trajet d'écoulement à une sortie sous la forme d'un bec verseur (6, 7), dans lequel le trajet d'écoulement inclut un bol peu profond (13) ayant des côtés en pente menant à une sortie (14) menant à une chambre intermédiaire (15), laquelle chambre intermédiaire (15) mène à un col de sortie (16), le col (16) étant en communication fluidique directe avec la sortie (14), dans lequel la section transversale du col (16) est inférieure à la section transversale du bec verseur de sorte que le café liquide a une vitesse supérieure à travers le col (16) qui est réduite dès que le café passe dans le bec verseur (6, 7),
**caractérisé en ce que** le support externe (2) a une sortie comprenant deux becs verseurs (6, 7) espacés pour permettre à du café d'être évacué dans deux tasses simultanément, chaque bec verseur (6, 7) comprenant un passage longitudinal ayant en son sein une nervure s'étendant longitudinalement (8a, 9a) pour diviser l'écoulement dans le bec verseur (6, 7).

2. Support de filtre selon la revendication 1, dans lequel le filtre comprend une plaque de filtre ayant une pluralité d'éléments verticaux adaptés à déchirer, en cours d'utilisation, une surface d'une capsule de café, la plaque ayant la pluralité de perforations adaptées à permettre le passage de café de la capsule à travers un trajet d'écoulement à une sortie.

3. Support de filtre selon la revendication 1 ou 2, dans lequel la sortie est un entonnoir allongé (6, 7) disposé essentiellement verticalement dans la position opérationnelle, le col (16) pénétrant dans l'entonnoir essentiellement perpendiculairement à l'axe de l'entonnoir à une distance de la sortie d'entonnoir.

4. Support de filtre selon la revendication 1 ou 2, dans lequel la sortie comprend un canal allongé avec les deux becs verseurs opposés (6, 7) qui s'étendent dans des directions opposées pour permettre à du café d'être évacué dans deux tasses simultanément et le col (16) pénètre dans le canal entre des lèvres de sortie (8, 9) des deux becs verseurs.

5. Support de filtre selon la revendication 4, dans lequel les lèvres de sortie (8, 9) de bec verseur sont disposées à équidistance du col (16).

6. Support de filtre selon l'une quelconque des revendications 1 à 5, dans lequel la section transversale du col est inférieure à 20 % de la section transversale des becs verseurs (6, 7).

7. Support de filtre selon l'une quelconque des revendications 4 à 6, dans lequel les becs verseurs (6, 7) comprennent chacun un canal ouvert généralement en forme de U.

8. Support de filtre selon l'une quelconque des revendications 4 à 7, dans lequel les becs verseurs (6, 7) sont chacun inclinés vers le bas vers la lèvre (8, 9).

9. Support de filtre selon l'une quelconque des revendications 4 à 8, dans lequel les becs verseurs (6, 7) s'étendent dans des directions opposées à 180° d'écart en plan.

10. Support de filtre selon l'une quelconque des revendications 1 à 9, dans lequel les nervures (8a, 9a) s'étendent chacune vers l'intérieur depuis la lèvre externe respective (8, 9).

11. Support de filtre selon la revendication 10, dans lequel les nervures (8a, 9a) font saillie au-delà des lèvres externes (8 9).
